# EUROPÄISCHE PATENTSCHRIFT

(11) **EP 2 878 240 B1**
(45) Veröffentlichungstag und Bekanntmachung des Hinweises auf die Patenterteilung: **13.03.2019**
(21) Anmeldenummer: 14195298.6
(22) Anmeldetag: 28.11.2014
(51) Int. Cl.: A47J 31/42, A47J 42/50

(54) **Kaffeevollautomat mit abnehmbarem Bohnenbehälter**
Fully automatic coffee machine with removable bean container
Machine à café entièrement automatique dotée d'un récipient amovible pour les grains de café

(30) Priorität: 29.11.2013 DE 102013224592
(43) Veröffentlichungstag der Anmeldung: 03.06.2015
(73) Patentinhaber: BSH Hausgeräte GmbH, 81739 München (DE)
(72) Erfinder: Gortnar, Primoz, 1215 Medvode (SI)

(56) Entgegenhaltungen:
- EP-A1- 1 440 643
- WO-A1-2004/098361
- WO-A1-2008/101773
- US-A1- 2004 123 747
- US-A1- 2009 127 363

## Beschreibung

Die Erfindung betrifft einen Kaffeevollautomaten für Haushaltszwecke, mit einem Gehäuse und einem davon abnehmbaren Vorratsbehälter für ungemahlenen Kaffeebohnen, mit einem Mahlwerk für Kaffeebohnen, mit einer Abgabeöffnung des Vorratsbehälters für die Zufuhr der Bohnen ins Mahlwerk und mit einer Verschlusseinrichtung zum Verschließen der Abgabeöffnung mit einer Tür, die zwischen einer Öffnungsstellung zur Freigabe der Abgabeöffnung und einer Schließstellung zum Verschließen der Abgabeöffnung verstellbar ist. Der Vorratsbehälter kann vom Gehäuse abgenommen werden, indem er vorzugsweise auf einer horizontalen Betätigungsbahn bewegbar, vorzugsweise verschiebbar ist. Dabei kann die Tür zwischen ihrer Öffnungsstellung und ihrer Schließstellung bewegt werden. Insbesondere die Vorratsbehälter von Einbaukaffeevollautomaten lassen sich in der geschilderten Weise bedienen.

Aus der EP 2 120 658 B1 ist ein Bohnenbehälter für einen Getränkeautomaten bekannt mit einem Behältnis zur Aufbewahrung von Bohnen, mit einer Abgabeöffnung für die Zufuhr der Bohnen zum Mahlwerk und mit einer Verschlusseinrichtung, die zumindest ein bewegliches Verschlusselement zum Verschließen der Abgabeöffnung aufweist, wobei das Verschlusselement um eine zur Ausgaberichtung parallel verlaufende Achse drehbar ist und wobei das Verschlusselement eine Anzahl von radial zur Achse angeordneten Segmenten aufweist, die spiralförmig um eine Welle angeordnet und an ihrem Außenumfang jeweils in einer gewindeartigen Führung geführt sind. Vor Abnahme des Bohnenbehälters kann die Verschlusseinrichtung manuell betätig werden, um die Abgabeöffnung zu verschließen.

Die WO 2008/101773 A1 offenbart Bohnenbehälter für einen Getränkeautomaten, mit einem Behältnis zur Aufbewahrung von Bohnen, mit einer Abgabeöffnung für die Zufuhr der Bohnen in ein Mahlwerk und mit einem beweglich gegenüber der Abgabeöffnung angeordneten Kupplungselement zum Verbinden des Behältnisses mit dem Getränkeautomaten, der dadurch gekennzeichnet ist, dass das Behältnis und das Kupplungselement im Bereich der Abgabeöffnung jeweils ein Verschlusselement aufweisen, die zum Öffnen und Schliessen der Abgabeöffnung relativ zueinander bewegbar sind.

Die EP 0 440 643 A1 offenbart einen Kaffeebohnenbehälter für einen Kaffeeautomaten, umfassend ein Behältnis zur Aufbewahrung von Kaffeebohnen mit einem Ausgabeschacht, über den in dem Behältnis befindliche Kaffeebohnen einem Mahlwerk zugeführt werden können, und umfassend einen koaxial zum Ausgabeschacht angeordneten Kupplungsring zum Verbinden des Kaffeebohnenbehälters mit einem Kaffeeautomaten.

Aufgabe der Erfindung ist es dagegen, den Betätigungsvorgang des Vorratsbehälters zu vereinfachen.

Prinzipiell wird die Aufgabe allein durch Entnehmen des Vorratsbehälters erfüllt, wobei die Abgabeöffnung ohne weitere manuelle Betätigung verschlossen wird. Speziell wird die Aufgabe bei einem eingangs genannten Kaffeevollautomaten erfindungsgemäß dadurch gelöst, dass die Tür durch manuelles Bewegen des Vorratsbehälters vorspannungsfrei zwischen der Öffnungsstellung und der Schließstellung bewegbar ist. Das manuelle Bewegen des Vorratbehälters kann entweder sein Einsetzen in das Gehäuse des Kaffeevollautomaten bedeuten oder seine Entnahme aus dem Gehäuse. Dementsprechend wird die Tür beim Einsetzen von einer Schließstellung in ihre Öffnungsstellung bewegt und bei der Entnahme des Vorratbehälters in der Gegenrichtung. Erfindungsgemäß ist die Tür durch manuelles Bewegen des Vorratsbehälters vorspannungsfrei zwischen der Öffnungsstellung und der Schließstellung bewegbar, wobei durch eine verschwenkbare Rastnase als Anschlag am Gehäuse des Kaffeevollautomaten, die quer zur Betätigungsbahn und bei eingesetztem Vorratsbehälter in Berührkontakt mit der Tür steht und von einer Arretierstellung aus der Betätigungsbahn heraus in eine Lösestellung bewegbar ist, und bei eingesetztem Vorratsbehälter in der Richtung der Betätigungsbahn der Tür an einer Kante der Tür arretierend angreift.

Erfindungsgemäß ist jedoch keine dieser beiden Bewegungsrichtungen der Tür vorgespannt. Das bedeutet, dass weder das Verbringen der Tür in die Öffnungsstellung noch in ihre Schließstellung entgegen der Kraft einer Feder erfolgen muss und damit besonders leichtgängig ablaufen kann. Je geringer die Betätigungskraft dafür ausfällt, umso geringer ist die Gefahr, dass ein Benutzer eine Fehlfunktion aufgrund eines zu hoch empfunden Betätigungsaufwands vermuten könnte. Außerdem erleichtert sich damit jedenfalls die Bedienung des Kaffeevollautomaten und verringert sich der Bauaufwand und seine mechanische Anfälligkeit.

Die Abgabeöffnung erlaubt eine Passage der Kaffeebohnen ihrer Schwerkraft folgend in vertikaler Richtung. Das Verschließen der Abgabeöffnung kann daher vorzugsweise durch eine Bewegung der Tür in einer horizontalen Richtung erfolgen, indem sie entweder um eine vertikale Achse rotatorisch oder in horizontaler Richtung translatorisch bewegbar ist. Damit bieten sich zwei Konstruktionsprinzipien für die Verschlusseinrichtung, die je nach Betätigungsrichtung des Vorratsbehälters oder je nach Platzverhältnissen zum Einsatz kommen können. So erfordert eine rotatorische Bewegung eine vertikal verlaufende Achse und deren Lagerung, die in der Bewegungsrichtung der Tür einen verhältnismäßig geringen Bauraum beansprucht. Eine translatorisch verschiebbare Tür erfordert im vorliegenden Fall eine horizontale Führung, die keine Platzkonflikte mit dem über ihr angeordneten Vorratsraum für die Kaffeebohnen verursacht.

Die Verschlusseinrichtung soll erfindungsgemäß nicht mehr separat und händisch durch den Benutzer betätigt werden. Nach Erfindung verfügt sie daher über einen Anschlag am Gehäuse des Kaffeevollautomaten, der quer zur Betätigungsbahn und bei eingesetztem Vorratsbehälter in Berührkontakt, also in unmittelbarer Anlage an bzw. mit der Tür steht und unter Kraftaufwand von einer Arretierungsstellung aus der Betätigungsbahn heraus in eine Lösestellung bewegbar ist. In der Arretierungsstellung hält der Anschlag die Tür fest, in der Lösestellung gibt er sie frei. Der Anschlag liegt bzw. wirkt quer zur Richtung der Betätigungsbahn des Vorratsbehälters, wobei er jedoch nicht dessen Bewegung stoppen kann, sondern lediglich mit der Tür zusammenwirkt. Während also der Behälter dem Gehäuse entnommen wird und dazu entlang der Bewegungsbahn verschoben wird, hält der Anschlag die Tür zunächst fest, sodass sie relativ zum Vorratsbehälter verschoben wird. Dabei wird sie von ihrer Öffnungsstellung in ihre Schließstellung bewegt, verschließt also die Abgabeöffnung des Vorratsbehälters.

Sobald die Tür ihre Schließstellung erreicht hat, gibt der Anschlag die Tür frei, damit der Vorratsbehälter, an dem die Tür gelagert ist, behinderungsfrei entnommen werden kann. Dazu kann der Anschlag von einer Arretierstellung in eine Lösestellung bewegt werden. In der Arretierstellung liegt er in unmittelbarer Anlage an der Tür an, um sie von der Öffnungsstellung in die Schließstellung zu bewegen. In der Lösestellung dagegen lässt er sich unter geringfügigem Kraftaufwand aus dem Berührkontakt von der Tür lösen, sodass er jetzt ihre weitere Bewegung, nämlich seine mit dem Vorratsbehälter gemeinsame Bewegung, und damit dessen Entnahme nicht mehr behindert.

Selbstverständlich lässt sich der Anschlag im Sinne einer kinematischen Umkehr auch am Vorratsbehälter bzw. an dessen Tür anbringen und kann in der bereits beschriebenen Weise mit dem Gehäuse zusammenwirken. Auch wenn diese Anordnung nicht durchgehend detailliert beschrieben wird, soll sie von der obigen und der folgenden Beschreibung des Anschlags und seiner Ausführungsformen mit umfasst sein.

Der geringe Kraftaufwand, der dafür erforderlich ist, den Anschlag von seiner Arretierstellung in seine Lösestellung zu bringen, kann beispielsweise durch eine Richtungsänderung in der Bewegungsbahn des Vorratsbehälters bestehen. Sobald die Abgabeöffnung verschlossen ist, kann ihm eine Führung des Vorratsbehälters beispielsweise eine größere Bewegungsfreiheit bieten, sodass der Vorratsbehälter zum Beispiel angehoben oder abgekippt werden kann. Dabei kann der Anschlag die Tür freigeben. Nach der Erfindung ist der Anschlag als eine verschwenkbare Raste bzw. Rastnase ausgebildet, die in Richtung der Betätigungsbahn in einer Arretierstellung an einer Kante der Tür arretierend angreift. Für die Lösestellung lässt sie sich verschwenken, sodass sie von der Anlage an der Kante der Tür freikommt. Damit kann die Bewegung des Vorratsbehälters unverändert bleiben und lediglich ein gewisser Kraftaufwand erforderlich werden, die Rastnase aus ihrer Arretierstellung in ihre Lösestellung zu überführen.

Nach einer dazu alternativen Ausgestaltungsform der Erfindung dient als Anschlag eine verschwenkbare Rippenfläche, deren Rippen quer zur Betätigungsbahn verlaufen und in die bei eingesetztem Vorratsbehälter eine Rippe an der Tür eingreift. Die Rippe kann an der Kante der Tür oder parallel zu ihr an einer geeigneten anderen Position verlaufen. Nach einer dazu alternativen Ausgestaltung der Erfindung kann eine schwenkbare Ratnase in eine festliegende Rippenfläche an der Tür eingreifen. Schließlich kann nach einer weiteren vorteilhaften Ausgestaltung der Erfindung eine verschwenkbare Rippenfläche am Gehäuse in eine festliegende Rippenfläche an der Tür eingreifen. Im Sinne der oben bereits erwähnten kinematischen Umkehr können auch die verschwenkbare Rippenfläche an der Tür und die festliegende Rippenfläche am Gehäuse ausgebildet sein.

Statt einer einzigen Rastnase, die mit nur einer Kante zusammenwirkt, können jedenfalls die Rippen der schwenkbaren Rippenfläche quasi als eine Reihe von hintereinander angeordneten parallel verlaufenden Rastnasen mit der festliegende Rippenfläche an der Tür zusammenwirken, die wie eine Reihe von hintereinander angeordneter Kanten wirken. Bei eingesetztem Vorratsbehälter liegen folglich eine verschwenkbare Rippenfläche am Gehäuse und eine an der Tür festliegende Rippenfläche aufeinander. Sie greifen innerhalb eines relativen Verschiebebereichs zueinander zuverlässig ineinander. Der Verschiebebereich entspricht der Erstreckungslänge der Rippenflächen in Richtung der Betätigungsbahn. Damit werden eventuelle Ungenauigkeiten infolge von Herstellungstoleranzen unbedeutend und stören nicht, weil die Tür nicht nur an einer bestimmten Kante, sondern über einen gewissen Bereich, nämlich über den Verschiebereich hinweg, zuverlässig an den zusammenwirkenden Rippenflächen gehalten und damit ein ggf. störendes Spiel unterbunden wird. Außerdem kann ein eventuell auftretender Spalt vermieden werden, in dem sich Fremdkörper absetzen und eine weitere Betätigung behindern könnten.

Der Anschlag, also sowohl die schwenkbare Rippenfläche als auch die Rastnase, können an nahezu jedem beliebigen Ort der Tür in Berührkontakt mit ihr stehen. Dafür sind sie insbesondere nicht auf eine ohnehin bestehende Kante der Tür festgelegt. Vielmehr kann die Rastnase auch an einem fensterartigen Durchbruch in der Tür eingreifen, sodass ihre räumliche Anordnung bezüglich der Tür weitgehend beliebig sein kann. Der Ort der Rippenfläche an der Tür ist ebenfalls weitgehend beliebig wählbar. Dadurch ergibt sich eine höhere konstruktive Freiheit für die Anordnung der Rippenflächen bzw. der Rastnase.

Nach einer weiteren vorteilhaften Ausstattung kann der Anschlag, also die Rastnase oder die verschwenkbare Rippenfläche, in einer Arretierstellung vorgespannt sein. Damit nimmt sie die Arretierstellung zuverlässig ein, hält also die Tür zuverlässig fest, sobald der Vorratsbehälter entnommen wird. Ihr überführen in die Lösestellung dagegen erfordert jenen bereits erwähnten geringen Kraftaufwand, der sie deaktiviert. Die Vorspannung kann durch ein beliebiges elastisches Element erreicht werden, also beispielsweise durch eine Druck-, Zug- oder Drehfeder aus Stahl, aus Gummi oder durch eine Druckfeder aus einem kompressiblen elastischen Material.

Nach einer weiteren vorteilhaften Ausgestaltung der Erfindung kann das Gehäuse über eine Federzunge verfügen, die aus dem Material des Gehäuses herausgebildet ist und an ihrem freien Ende der Anschlag, also die Rastnase oder die verschwenkbare Rippenfläche trägt. In der Regel bestehen Gehäuse von Kaffeevollautomaten aus Kunststoff, sodass sich eine Federzunge ohne nennenswerten zusätzlichen Aufwand ausbilden lässt. An deren freiem Ende lässt sich in einer weiteren vorteilhaften Weise auch die Rastnase oder die verschwenkbare Rippenfläche selbst mit ausbilden, sodass sowohl ihre als auch die Herstellung ihrer Vorspanneinrichtung äußerst kostengünstig erfolgen kann und keine separaten Kleinteile und deren Montage erfordert.

Nach einer weiteren vorteilhaften Ausgestaltung der Erfindung kann am Anschlag, also ( an der Rastnase oder an der verschwenkbaren Rippenfläche, eine Taste für ihre manuelle Betätigung angeordnet sein. Ihre Betätigung kann sie von ihrer Arretierstellung in ihre Lösestellung überführen. Aufgrund ihrer Vorspannung kehrt sie in die Arretierstellung selbsttätig zurück. Die Taste erleichtert also die Betätigung des Anschlags, um ihn von der vorgespannten Arretierstellung entgegen der Kraft der Vorspannung in die Lösestellung zu überführen. Die Taste kann mit ihm verbunden bzw. an ihm angeformt sein, wodurch ihre Bedienung einfach nachvollziehbar sein und ihre Herstellung kostengünstig zusammen mit dem Anschlag erfolgen kann. In einer weiteren vorteilhaften Fortbildung können sowohl der Anschlag als auch die Taste in gleicher Weise und gegebenenfalls gemeinsam, nämlich auf derselben Federzunge ausgebildet sein.

Auch wenn die Tür ohne eine separate manuelle Betätigung, nämlich durch den Anschlag, verschlossen wird, so erfordert bislang das Betätigen des Anschlags noch den manuellen Eingriff des Benutzers. Nach einer weiteren vorteilhaften Ausgestaltung der Erfindung kann am Vorratsbehälter ein Auslöser angeordnet sein, der den Anschlag erst bei vollständig verschlossener Abgabeöffnung von seiner Arretierstellung in die Lösestellung überführt. Damit kann eine separate manuelle Betätigung zur Freigabe der Tür und zur vollständigen Entnahme des Vorratsbehälters entfallen. Denn der Auslöser kann derart am Vorratsbehälter platziert sein, dass er erst bei vollständig verschlossener Abgabeöffnung die Taste betätigt und damit den Anschlag von ihrer Arretierstellung in die Lösestellung überführt.

Nach einer weiteren vorteilhaften Ausgestaltung der Erfindung umfasst der Vorratsbehälter eine zapfenförmige Nocke als Auslöser, die mit einer Gegennocke als Taste am Gehäuse zusammenwirkt. Die Nocke läuft in einer abgerundeten Kuppe aus, die nach dem Verschließen der Abgabeöffnung auf die ebenfalls abgerundete Gegennocke als Taste stößt. Die Nocke drückt die Gegennocke abwärts und bewegt damit zugleich den Anschlag aus seiner Arretierstellung in die Lösestellung. Damit ist die Tür freigegeben, die sich inzwischen in ihrer Schließstellung befindet und die Abgabeöffnung verschlossen hat. Ohne weiteres Zutun des Benutzers lässt sich also die Tür vor die Abgabeöffnung schieben, und der Vorratsbehälter anschließend dem Gehäuse des Kaffeevollautomaten entnehmen, ohne dass Bohnen aus dem Vorratsbehälter verloren gehen können.

Durch unsachgemäße Bedienung des Vorratsbehälters oder durch bewusste Manipulation könnte sich die Tür des abgenommenen Vorratsbehälters grundsätzlich öffnen lassen, wodurch er sich ggf. ungewollt entleert. Nach einer weiteren vorteilhaften Ausgestaltung der Erfindung kann der Vorratsbehälter über eine lösbare Haltevorrichtung verfügen, die die Tür in der Schließstellung festhält. Sie kann eine erhöhte Gleitreibung der Tür in ihrer horizontalen Führung am Vorratsbehälter zumindest in einem Endabschnitt aufweisen, damit sie sich nicht ohne weiteres aus ihrer Schließstellung bewegen lässt. Alternativ kann die Haltevorrichtung eine Verrastung bieten, die die Tür in ihrer Schließstellung festhält. Nach einer weiteren Alternative kann ein vorgespannter Kipphebel die Tür in ihrer Schließstellung festhalten. Beim Einsetzen des Vorratsbehälters in das Gehäuse des Kaffeevollautomaten lässt er sich durch einen Riegel deaktivieren, so dass die Tür in ihre Öffnungsstellung verschoben werden kann.

Die Abgabeöffnung des eingesetzten Vorratsbehälters korreliert mit einer Befüllöffnung im Gehäuse des Kaffeevollautomaten, die zum Mahlwerk führt. Die Befüllöffnung ist in einer Aufstellfläche für den Vorratsbehälter im Gehäuse angebracht. Es ist nicht vollständig auszuschließen, dass bei einer Entnahme des Vorratsbehälters aus dem Gehäuse einzelne Kaffeebohnen versehentlich auf der Aufstellfläche zurückbleiben. Sie können beim anschließenden Einsetzen des Vorratsbehälters dessen korrektes Positionieren über der Befüllöffnung behindern. Derartige Kaffeebohnen müssen daher von Hand entfernt werden. Sie aber überhaupt wahrzunehmen kann schwierig bis unwahrscheinlich sein, wenn der Vorratsbehälter wie eine Schublade in einen waagrechten, vor allem oberseitig geschlossenen Schacht im Gehäuse des Kaffeevollautomaten einzusetzen ist. Nach einer weiteren vorteilhaften Ausgestaltung der Erfindung kann die Aufstellfläche daher jenseits der Befüllöffnung regelmäßig durchbrochen, also gitterartig ausgebildet sein. Die Gitteröffnungen sind auf das Passieren von Kaffeebohnen hin dimensioniert. Damit braucht ein Benutzer die Aufstellfläche des Vorratsbehälters nicht mehr regelmäßig auf evtl. verlorene Kaffeebohnen oder andere Verunreinigungen hin zu untersuchen. Vielmehr ist es ausgeschlossen, dass verlorene Kaffeebohnen das Einsetzen des Vorratsbehälters behindern, was die Bedienung des Kaffeevollautomaten erleichtert.

Nach einer weiteren vorteilhaften Ausgestaltung der Erfindung kann der Kaffeevollautomat unterhalb der durchbrochenen Aufstellfläche über eine Leiteinrichtung verfügen, die in einen entnehmbaren Behälter mündet. Beispielsweise kann unterhalb der Aufstellfläche ein großflächiger flacher Trichter angebracht sein, dessen Hals bzw. Stiel in eine entnehmbare Schublade mündet. Verunreinigungen, die die Aufstellfläche durchtreten haben, können so bequem gesammelt und in wesentlich größeren Reinigungsintervallen entfernt werden als bei jedem Befüllen des Vorratsbehälters.

Insbesondere bei einem oberseitig abgedeckten Schacht für den Vorratsbehälter kommen als Verunreinigungen auf der Aufstellfläche ggf. Kaffeebohnen oder Bruchstücke davon vor. Andere Verunreinigungen sind unwahrscheinlich. Nach einer alternativen Ausgestaltungsform der Erfindung kann daher - wenn insbesondere aus Platzgründen möglich - unterhalb der durchbrochenen Aufstellfläche eine Leiteinrichtung angeordnet sein, die das Mahlwerk mündet. Zunächst verlorene Kaffeebohnen können so dennoch für eine Getränkezubereitung verwendet werden und müssen nicht entsorgt werden. Außerdem entfällt das Erfordernis, einen sonst vorhandenen Sammelbehälter in gewissen zeitlichen Abständen entleeren zu müssen. Damit steigt der Bedienungskomfort des Kaffeevollautomaten.

Das Prinzip der Erfindung wird im Folgenden anhand einer Zeichnung beispielshalber noch näher erläutert. Die Zeichnungen zeigen:
- Figur 1:: eine Prinzipdarstellung eines Vorratsbehälters auf einem Kaffeevollautomaten,
- Figur 2:: eine detaillierte Schnittansicht gemäß Figur 1,
- Figur 3:: eine Detailansicht gemäß Figur 2,
- Figur 4:: eine Schnittansicht gemäß der Schnittlinie IV - IV in Figur 3,
- Figuren 5 bis 7:: drei parallele Schnittansichten des teilweise entnommenen Vorratsbehälters,
- Figur 8:: eine schematisierte Schnittansicht entlang der Schnittlinie VII - VII in Figur 3,
- Figur 9:: eine perspektivische Ansicht des oberen Teils 17 des Kaffeevollautomaten,
- Figur 10:: eine perspektivische Unteransicht des Vorratsbehälters,
- Figur 11a bis c:: eine alternative Ausgestaltung zur Ausführung gemäß Figuren 1 bis 10,
- Figur 12:: eine alternative Ausgestaltungsform der Aufstellfläche, und
- Figur 13:: eine Schnittansicht zur Ausgestaltungsform gemäß Figur 12.

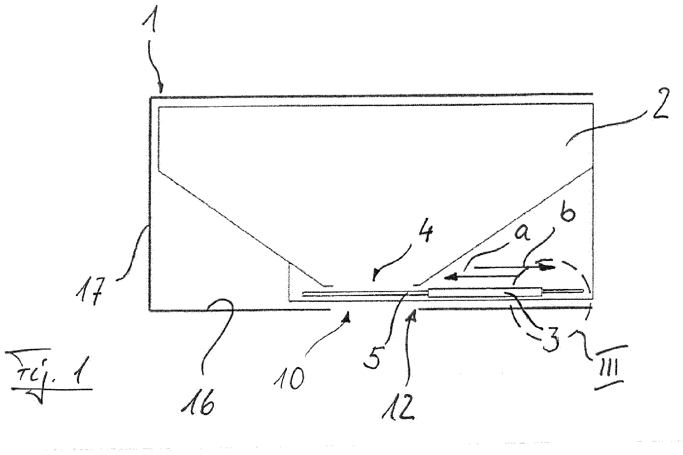

Figur 1 zeigt schematisiert einen oberen Teil 17 eines Gehäuses 1 eines Kaffeevollautomaten, in dem ein abnehmbarer Vorratsbehälter 2 für ungemahlene Kaffeebohnen in einer Einschubrichtung a eingeschoben werden kann. Der obere Teil 17 des Gehäuses 1 ist wie ein Schubfach ausgebildet, in das der Vorratsbehälter 2 als Schublade eingeschoben bzw. auf dessen Aufstellplatte 16 er abgestellt werden kann. Damit deckt das Gehäuse 1 den oberseitig offenen und eingeschobenen Vorratsbehälter 2 ab. Im Betrieb gelangen die Kaffeebohnen durch die Schwerkraft aus dem Vorratsbehälter 2 durch eine Ausgabeöffnung 4 in eine koaxial darunter angeordnete Befüllöffnung 12 im Gehäuse 1 des Kaffeevollautomaten und von dort in ein nicht dargestelltes Mahlwerk.

Damit der möglicherweise nur teilweise gefüllte Vorratsbehälter 2 bei einer Entnahme keine Kaffeebohnen durch die Ausgabeöffnung 4 verliert, verfügt er an der Ausgabeöffnung 4 über eine Verschlusseinrichtung 10. Sie umfasst eine horizontal verschiebbare Tür 3, die auf einer Schiene 5 in Richtung des Pfeils a in eine Schließstellung verbracht werden kann und die Ausgabeöffnung 4 dann vollständig verschießt. Wird sie in der Gegenrichtung des Pfeils a, nämlich in Richtung des Pfeils b verschoben, gelangt sie in eine Öffnungsstellung, in der sie die Ausgabeöffnung 4 vollständig frei gibt. In der in Figur 1 dargestellten Öffnungsstellung der Tür 3 können Kaffeebohnen aus dem Vorratsbehälter 2 durch die Ausgabeöffnung 4 in die Befüllöffnung 12 gelangen.

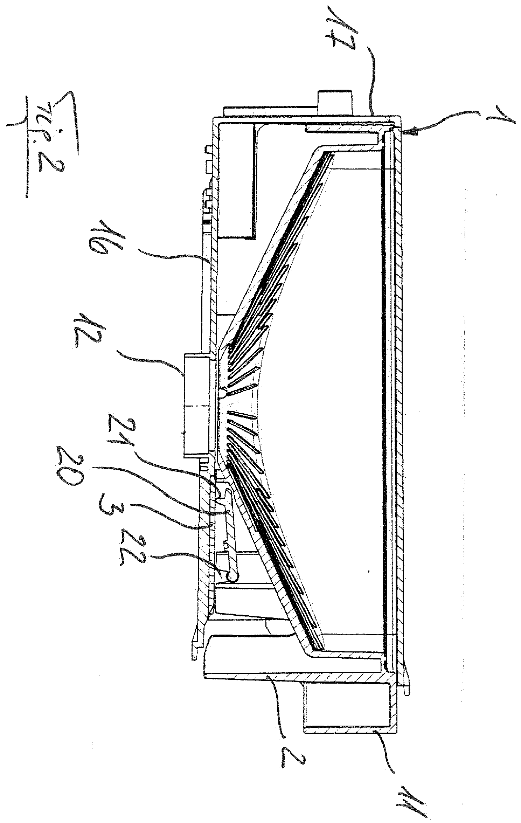

Figur 2 zeigt eine detaillierte Schnittansicht durch den Vorratsbehälter 2, der an einem Griff 11 aus dem schubfachartigen oberen Teil 17 des Gehäuses 1 herausgezogen werden kann. Er steht auf der Aufstellfläche 16, in der die Befüllöffnung 12 angebracht ist, durch deren Mittelpunkt die Schnittlinie der Ansicht verläuft. Rechts von ihr ist die Tür 3 zu erkennen. Über ihr befindet sich ein Kipphebel 20, der mit einer unterseitig abstehenden Nase 21 auf der Tür 3 aufliegt. Der Kipphebel 20 ist in einer Angel 22 um eine horizontale Achse drehbar gelagert und durch eine nicht dargestellte Drehfeder in einer Richtung auf die Tür 3 hin vorgespannt.

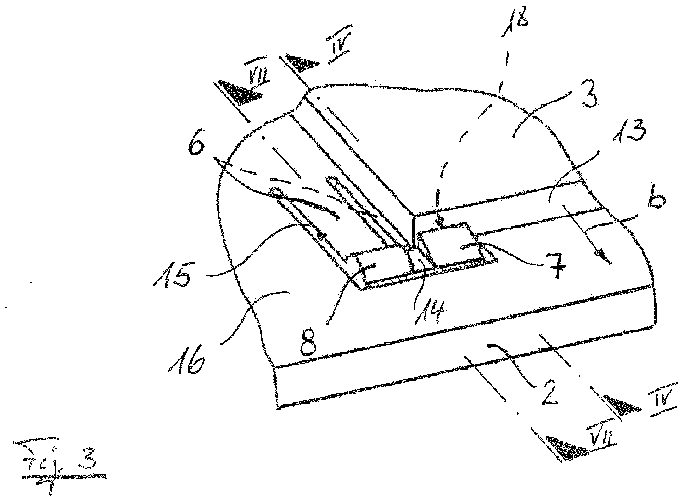

Figur 3 bietet eine schematisierte Draufsicht auf ein Detail der Aufstellplatte 16 des Gehäuses 1 an einer der Ausgabeöffnung 12 abgewandten Seite der Tür 3. Sie zeigt die Tür 3 in ihrer Öffnungsstellung gemäß Figuren 1 und 2, in der sie parallel auf der Aufstellplatte 16 aufliegt. Von der Tür 3 ist unter anderem eine seitliche Kante 13 zu erkennen. Eine Bewegung der Tür 3 in Richtung b (Figur 1) verhindert eine im Querschnitt dreieckförmige Rastnase 7, die mit ihrer senkrechten und in Figur 3 verdeckten Anschlagfläche 18 an der Kante 13 anschlägt und sie damit in der dargestellten Öffnungsstellung arretiert. Figur 3 zeigt also die Arretierstellung der Rastnase 7. Neben ihr und abseits der Tür 3 ist eine halbzylinderförmige Gegennocke 8 angebracht, die zusammen mit der Rastnase 7 auf einem gemeinsamen stegförmigen Träger 14 liegt. Der Träger 14 wiederum bildet das freie Ende zweier rechteckiger Federzungen 6, von denen nur die linke in Figur 3 vollständig zu erkennen ist, die rechte dagegen von der Tür 3 nahezu vollständig verdeckt ist.

Die Federzungen 6 sind aus dem gleichen Material wie die Aufstellplatte 16 ausgebildet und ergeben sich durch Einschnitte 15 an drei Seiten. Dadurch lassen sich die Federzungen 6 bzw. der Träger 14 und die darauf angebrachte Rastnase 7 und die Gegennocke 8 in einer Entsperrrichtung d abwärts in eine Lösestellung der Rastnase 7 schwenken. Aufgrund der Elastizität des Materials der Federzungen 6 ist dafür jedoch eine gewisse Betätigungskraft erforderlich. Bei Wegfall der Betätigungskraft schwingen die Federzungen 6 in ihre Ausgangslage zurück und bringen damit die Rastnase 7 und die Gegennocke 8 in ihren in Figur 3 dargestellten Ausgangszustand zurück. Die Federzungen 6 ermöglichen also ein Abtauchen sowohl der Rastnase 7 als auch der Gegennocke 8 in die Ebene der Aufstellplatte 16 hinein.

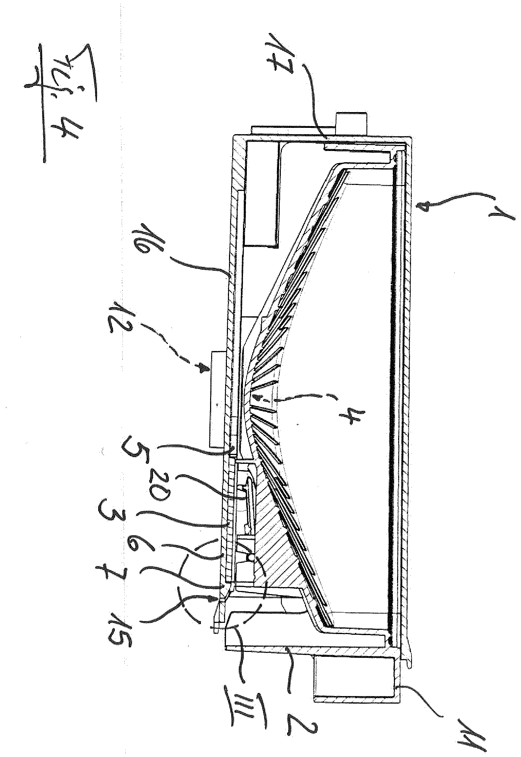

Figur 4 zeigt einen Schnitt gemäß der Schnittlinie IV - IV in Figur 3, der parallel zum Schnitt der Figur 2 liegt und demgegenüber seitlich versetzt statt durch die Ausgabeöffnung 4 durch die Rastnase 7 und durch deren Federzunge 6 hindurch verläuft. Der Kipphebel 20 ist jetzt ungeschnitten dargestellt. Zwischen der Ausgabeöffnung 4 und der Befüllöffnung 12 verlaufen die Schienen 5 als Horizontalführung der Tür 3.

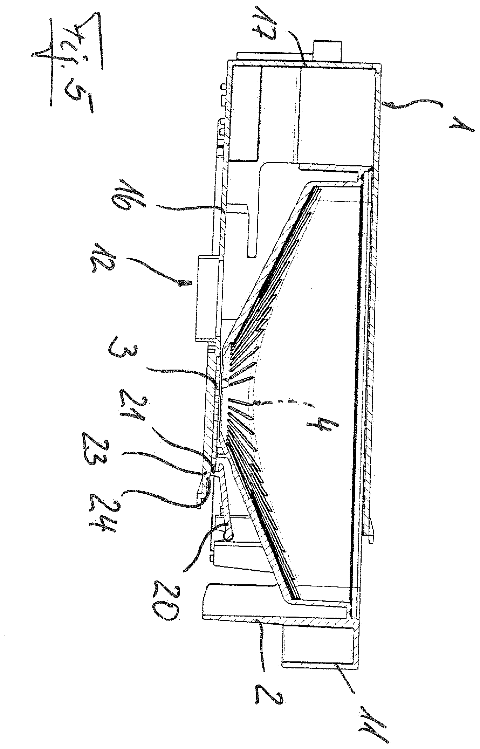

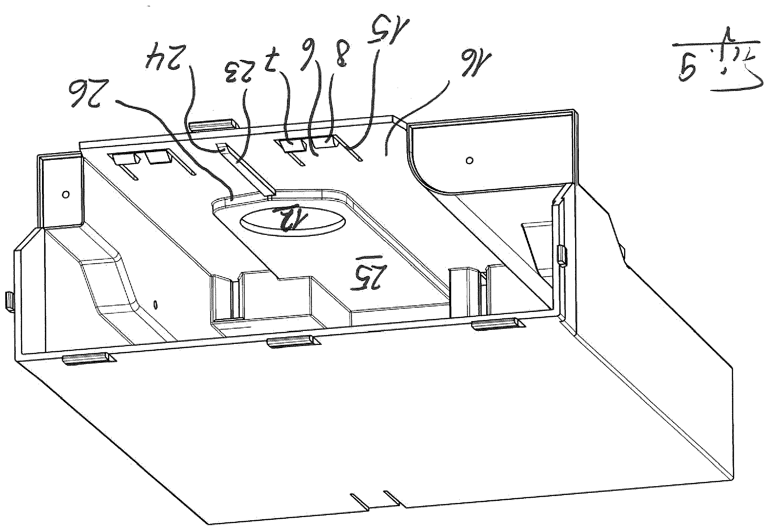

Die Figuren 5 bis 7 zeigen drei Schnittansichten des Vorratsbehälters 2 in derselben Stellung, in der er zu etwa einem Viertel aus dem Gehäuse 1 entnommen ist. Die Tür 3 verschließt die Ausgabeöffnung 4 vollständig, hat also ihre Schließstellung eingenommen. Die Schnittansicht der Figur 5 entspricht ihrer Lage nach derjenigen der Figur 2. Der Kipphebel 20 ist federkraftgetrieben hinter der Tür 3 abwärts geschwenkt und sichert ihre Schließstellung. Er liegt mit seiner Nase 21 auf einer Rippe 23 (vgl. Figuren 5, 9) im Bereich einer Anlaufschräge 24 auf.

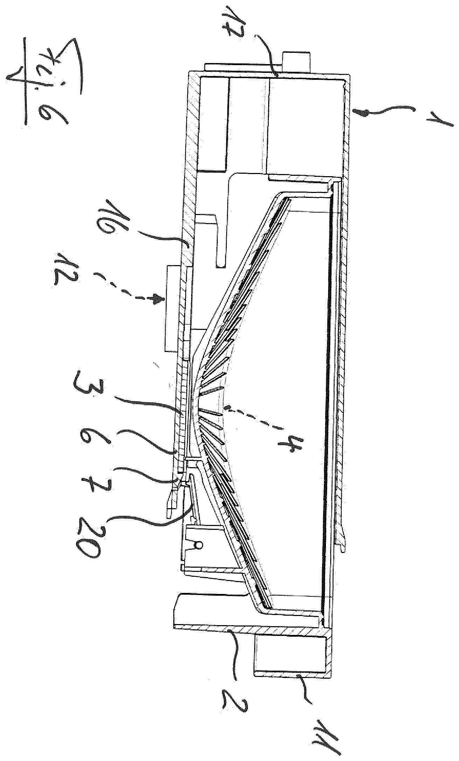

Die Schnittansicht der Figur 6 entspricht derjenigen der Figur 4. Sie zeigt die Rastnase 7 noch in ihrer Arretierstellung. Dahinter liegt der Kipphebel 20 bereits nicht mehr auf der Tür 3 auf, sondern auf der in dieser Schnittansicht verdeckten Rippe 23.

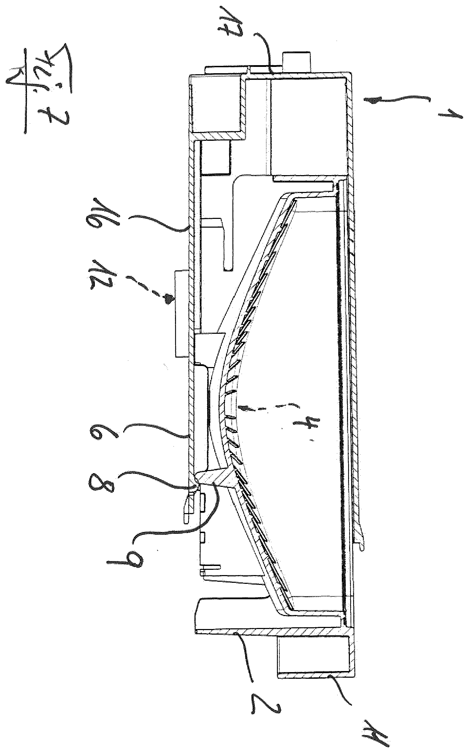

Die Schnittansicht der Figur 7 verläuft entlang der Schnittlinie VII - VII in Figur 3 und schneidet eine abgerundete Nocke 9, die an einer Unterseite des Vorratsbehälters 2 in der Nähe der Ausgabeöffnung 4 und unmittelbar neben der Tür 3 ortsfest angebracht ist. Sie streift beim Entnehmen des Vorratsbehälters 2 aus dem Gehäuse 1 über die Aufstellplatte 16 in der Entnahmerichtung b entlang. Sie ist derart positioniert, dass sie sich dabei auf die Gegennocke 8 zu bewegt.

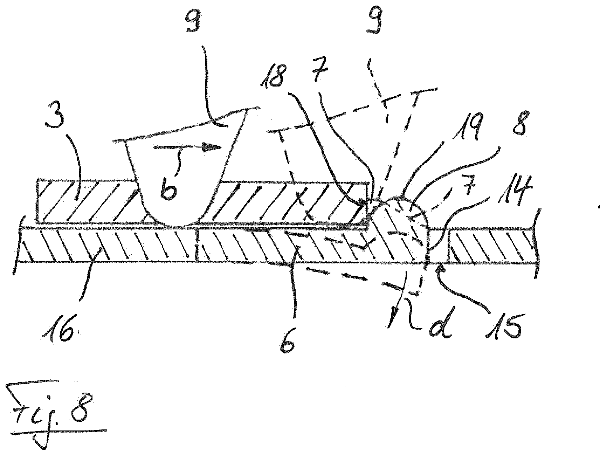

Diesen Zusammenhang stellt Figur 8 in einem schematisierten Schnitt entlang der Schnittlinie VII - VII in Figur 3 dar. Sie verdeutlicht den Übergang der Rastnase 7 von ihrer Arretierstellung in ihre Lösestellung. Die dreieckige Rastnase 7 hält mit ihrer vertikalen Anschlagfläche 18 die Tür 3 an deren Kante 13 in der Richtung b (s. Figur 1) fest. Die Rastnase 7 ist weitgehend verdeckt durch die davorliegende Gegennocke 8, deren Scheitellinie 19 genauso hoch liegt wie diejenige der Rastnase 7.

Bei Erreichen der Schließstellung der Tür 3 (vgl. Figuren 5 bis 7) hat die Nocke 9 die Gegennocke 8 erreicht. Jetzt drückt die Nocke 9 die Gegennocke 8 in der Entsperrrichtung d abwärts. Diese Position der Nocke 9 und der Gegennocke 8 ist in Figur 8 gestrichelt dargestellt. Dadurch wird auch die Rastnase 7 abwärts gedrückt, wodurch die Kante 13 von der Anschlagfläche 18 der Rastnase 7 frei kommt. Jetzt kann die Tür 3 in ihrer durch den Kipphebel 20 gesicherten Schließstellung zusammen mit dem Vorratsbehälter in Richtung b aus dem Gehäuse 1 gezogen werden.

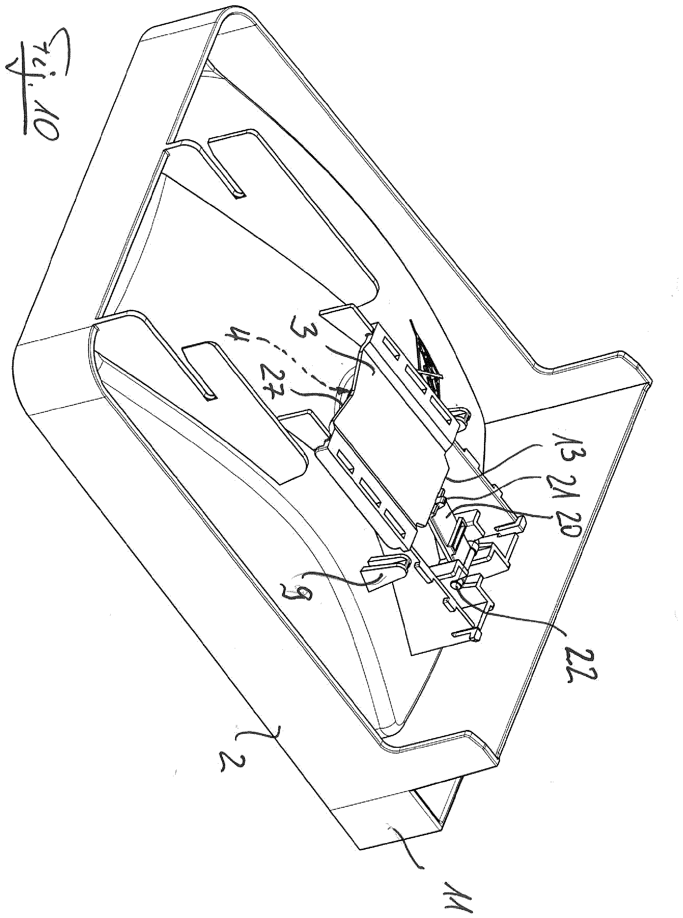

Figuren 9 und 10 zeigen perspektivische Ansichten des schubfachartigen Oberteils 17 des Kaffeevollautomaten einerseits und einer Unteransicht des entnommenen Vorratsbehälters 2 andererseits. In Figur 9 fällt der Blick auf die Aufstandsfläche 16, in der durch U-förmige Einschnitte 15 zwei Federlaschen 6 ausgebildet sind, auf denen jeweils sowohl eine Rastnase 7 als auch eine Gegennocke 8 gemeinsam angeordnet sind - insofern abweichend von Figur 3, wo sowohl die Rastnasen als auch die Gegennocke 8 jeweils einer eigenen Federlasche 6 zugeordnet sind. Etwa in der Mitte der Aufstandfläche 16 befindet sich die Befüllöffnung 12, die in einem etwas höher liegenden Plateau 25 angeordnet ist. Das Plateau 25 läuft auf seiner dem Betrachter zugewandten Seite in einer Kante 26 aus, an die die Rippe 23 anschließt.

Beim Einsetzen des Vorratsbehälters 2 in das Oberteil 17 bildet die Kante 26 eine Anschlagfläche für die Tür 3, die auf der Unterseite des Vorratsbehälters 2 gemäß Figur 10 verschiebbar angebracht ist. In ihrer dargestellten Schließstellung wird sie durch den Kipphebel 20 festgehalten, der gegen die Kante 13 der Tür 3 drückt und sie so vor der verdeckten Ausgabeöffnung 4 hält. Beim Einsetzen des Vorratsbehälters 2 stößt die Tür 3 mit ihrer der Kante 13 gegenüberliegenden Kante 27 an der Kante 26 des Plateaus 25 an. Gleichzeitig wird die Nase 21 des Kipphebels 20 auf der Anlaufschräge 24 nach oben und auf die Rippe 23 geschoben, womit der Kipphebel 20 die Tür 3 freigibt und aufgrund seiner abgerundeten Nase 21 auf die Oberseite der Tür 3 geschoben wird. Dazu ist die Tür 3 gewölbt ausgebildet, so dass sie in ihren zu den Schienen 5 parallelen Randbereichen auf der Aufstellplatte 16 aufliegt, aber über die Rippe 23 hinweg verläuft. Mit fortgesetztem Einschieben des Vorratsbehälters 2 in das Gehäuse 1 des Kaffeevollautomaten wir die Tür sukzessive von der Abgabeöffnung 4 weggeschoben, bis sie sich in Ihrer Öffnungsstellung befindet, wenn die Abgabeöffnung 4 mit der Befüllöffnung 12 fluchtet. Der Vorratsbehälter 2 ist dann vollständig in das Gehäuse 1 eingesetzt, womit der Kaffeevollautomat betriebsbereit ist.

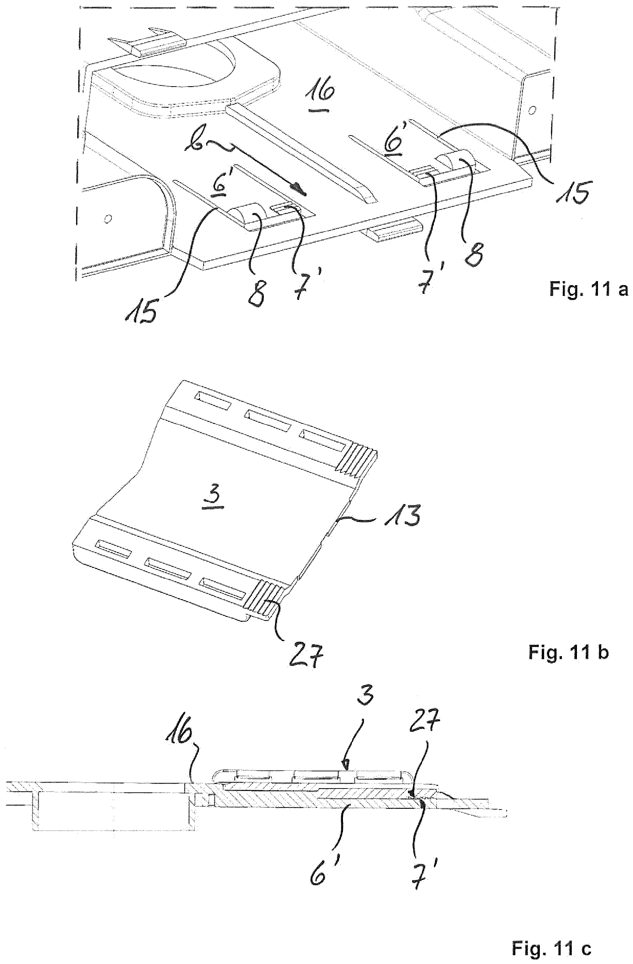

Figuren 11a bis c zeigen eine alternative Ausgestaltung zur Ausführungsform gemäß der Figuren 1 bis 10, wobei Figur 11a eine Ansicht vergleichbar der Figur 9, Figur 11b eine Detailansicht gemäß Figur 10 und Figur 11c eine Schnittansicht etwa entsprechend der Figur 8 darstellen. Wie in Figur 9 fällt auch in Figur 11a der Blick auf Aufstandsfläche 16, in der durch U-förmige Einschnitte 15 zwei Federlaschen 6' ausgebildet sind. An ihren freien Enden tragen die Federlaschen 6' sowohl die bereits beschriebene Gegennocke 8 als auch eine Rippenfläche 7', die anstelle der Rastnase 7 (vgl. Figur 9) angeordnet ist. Die einzelnen Rippen der Rippenfläche 7' verlaufen orthogonal bzw. quer zur Richtung b, in der der Vorratsbehälter 2 (nicht dargestellt) aus dem Gehäuse 1, dessen Bestandteil die Aufstandsfläche 16 ist, genommen wird. Die Rippenfläche 7' ist also durch ihre Lage auf der Federlasche 6' genauso verschwenkbar ausgebildet wie die Rastnase 7 durch den Aufbau gemäß Figur 8.

Figur 11b zeigt die Tür 3- in einer Unteransicht des Vorratsbehälters 2 vergleichbar der Ansicht in Figur 10, wobei sie dem Gegenüber um etwa 45° im Uhrzeigersinn verdreht wiedergegeben ist. Dadurch erhält man einen Blick auf die Kante 13, die gemäß Führungsform laut Figuren 1 bis 10 mit der Rastnase zusammengewirkt hat. Stattdessen sind nun die Rippenflächen 27 auf der Unterseite der Tür 3 angebracht, die im gleichen Abstand angeordnet sind, die die verschwenkbaren Rippenflächen 7' auf den Federlaschen 6'. Bei eingesetzten Vorratsbehälter 2 greifen die festgelegenen Rippenflächen 27 in die verschwenkbaren Rippenflächen 7' ein. Dabei entfalten sie ihre arrentierende Wirkung nicht nur in einer Relativlage der Tür 3 und der Aufstandsfläche 16 zueinander. Vielmehr gibt es eine Mehrzahl an Positionen, in der die verschwenkbaren Rippenflächen 7' in die festliegenden Rippenflächen 27 eingreifen können und so die Tür 3 festhalten.

Eine mögliche derartige Position zeigt Figur 11c, in der die Rippenflächen 27 in der Tür 3 vollflächig in die Rippenflächen 7' auf den Federlaschen 6- eingreifen. Sollten sich beispielsweise aus Herstellungsgründen gewisse Toleranzen zwischen dem Vorratsbehälter 2 und dem Gehäuse 1 ergeben, so können die Rippenflächen 27 und 7' auch in geringfügigen abweichenden Positionen in der Richtung b gegeneinander verschoben aufeinander zu liegen kommen und dennoch ihre Wirkung als lösbarer Anschlag entfalten. Mögliche Herstellungstoleranzen stören damit nicht mehr und beeinträchtigen die Funktionsweise des Kaffeevollautomaten bzw. des Vorratsbehälters 2 nicht. Auch ein potenzielles klappern in Folge einer Spaltbildung zwischen der Kante 13 einerseits und der Rastnase 7 (vgl. Figur 8) andererseits kann damit vermieden werden.

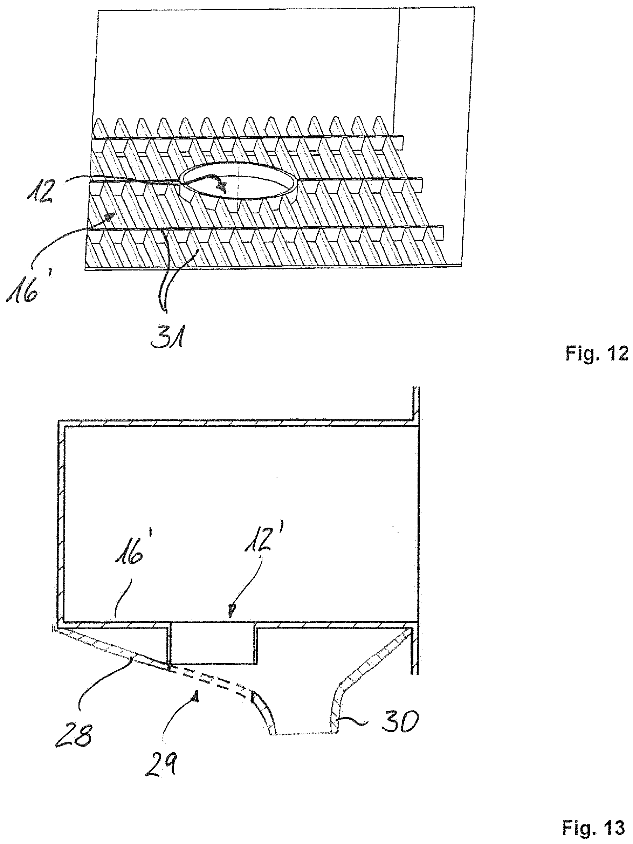

Figuren 12 und 13 dienen der Erläuterung einer alternativen Ausgestaltungsform einer Aufstandsfläche 16'. Figur 12 bietet eine ähnliche Ansicht wie Figur 9, jedoch stark vereinfacht. In der Mitte der Aufstandsfläche 16' ist eine herkömmliche kreisrunde Befüllöffnung 12 zu erkennen. Sie ist in der gitterartig durchbrochenen Aufstandsfläche 16' angeordnet. Im Übrigen entspricht die in Figur 12 schematisch dargestellte Aufstandsfläche 16' derjenigen Aufstandsfläche 16 gemäß Figuren 1 bis 10. Abweichend jedoch sind die Öffnungen der gitterartigen Aufstandsfläche 16' so groß bemessen, dass jedenfalls auch eine überdurchschnittlich große, vollständige Kaffeebohne durch die Aufstandsfläche 16' hindurchtreten kann. Um einerseits eine möglichst geringe oberseitige Auflagefläche für Kaffeebohnen zu bieten und andererseits eine ausreichnde Stabilität zu bieten, sind die in der Ebenen der Aufstandsfläche 16' aufeinander senkrecht stehenden Gitterstäbe 31 mit einem dreiecksförmigen, sich nach unten erweiternden Querschnitt ausgebildet). Unterhalb der kompletten Aufstandsfläche 16' ist ein Trichter 28 angeordnet. Er weist unterhalb der Befüllöffnung 12 eine Durchlassöffnung 29 für die ungemahlenen Kaffeebohnen in Richtung Mahlwerk auf. In Längsrichtung seitlich versetzt dazu bildet der Trichter 28 einen Hals 30 als seine engste Stelle aus, der in einen nicht dargestellten, entnehmbaren Behälter mündet. Kaffeebohnen oder ggf. auch andere Verunreinigungen, die auf die Aufstandsfläche 16' fallen, gelangen also durch das Gitter in den Trichter 28, von wo aus sie der Schwerkraft folgend in den entnehmbaren Behälter fallen und dort gesammelt werden. Wie in regelmäßigen Reinigungsintervallen, die wesentlich seltener stattfinden als der Wechsel des Vorratsbehälters 2, kann der entnehmbare Behälter entleert und damit die unerwünschten Kaffeebohnen oder sonstigen Verunreinigungen beseitigt werden. Jedenfalls bleiben sie nicht auf der Aufstandsfläche 16' liegen, wo sie beim Einsetzen des Vorratsbehälters 2 zu einer Fehlfunktion führen oder das Einsetzen des Vorratsbehälters 2 behindern könnten.

Da es sich bei den vorhergehenden, detailliert beschriebenen Vorratsbehältern um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Tür in anderer Form als in der hier beschriebenen erfolgen, beispielsweise als Fotolinsenverschluss oder drehbar um eine vertikale Achse. Ebenso kann der Kipphebel in einer anderen Form ausgestaltet werden, wenn dies aus Platzgründen bzw. designerischen Gründen notwendig ist.

### Bezugszeichenliste

- 1: Gehäuse
- 2: Vorratsbehälter
- 3: Tür
- 4: Ausgabeöffnung
- 5: Schiene
- 6: Federzunge 6' auch
- 7: Rastnase als Anschlag
- 7': verschwenkbare Rippenfläche
- 8: Gegennocke
- 9: Nocke
- 10: Verschlussvorrichtung
- 11: Zugfeder
- 12: Befüllöffnung
- 13: Kante
- 14: Träger
- 15: Einschnitt
- 16: Aufstellplatte
- 17: Oberer Teil des Gehäuses 1
- 18: Anschlagfläche
- 19: Scheitellinie
- 20: Kipphebel
- 21: Nase
- 22: Angel
- 23: Rippe
- 24: Anlaufschräge
- 25: Plateau
- 26: Kante
- 27: festliegende Rippenfläche
- 28: Trichter
- 29: Durchlassöffnung
- 30: Hals
- a: Schließrichtung, Einschubrichtung
- b: Öffnungsrichtung
- d: Entsperrrichtung

## Patentansprüche

1. Kaffeevollautomat für Haushaltszwecke mit einem Gehäuse (1) und einem davon abnehmbaren Vorratsbehälter (2) für Kaffeebohnen, der dazu auf einer Betätigungsbahn bewegbar ist, mit einem Mahlwerk für Kaffeebohnen, mit einer Ausgabeöffnung (4) des Vorratsbehälters (2) für die Zufuhr der Bohnen in das Mahlwerk und mit einer Verschlusseinrichtung (10) zum Verschließen der Ausgabeöffnung (4) mit einer Tür (3), die zwischen einer Öffnungsstellung zur Freigabe der Ausgabeöffnung (4) und einer Schließstellung zum Verschließen der Ausgabeöffnung (4) bei Bewegen des Vorratsbehälters (2) verstellbar ist, wobei die Tür (3) durch manuelles Bewegen des Vorratsbehälters (2) vorspannungsfrei zwischen der Öffnungsstellung und der Schließstellung bewegbar ist, mit einem Anschlag (7; 7') am Gehäuse (1) des Kaffeevollautomaten, der quer zur Betätigungsbahn und bei eingesetztem Vorratsbehälter in Berührkontakt mit der Tür (3) steht und von einer Arretierstellung aus der Betätigungsbahn heraus in eine Lösestellung bewegbar ist, **gekennzeichnet durch**
- eine verschwenkbare Rastnase (7) als Anschlag, die bei eingesetztem Vorratsbehälter (2) in der Richtung der Betätigungsbahn der Tür (3) an einer Kante (13) der Tür (3) arretierend angreift,
oder
- eine verschwenkbare Rippenfläche (7') als Anschlag, deren Rippen quer zur Betätigungsbahn verlaufen und in die bei eingesetztem Vorratsbehälter eine Rippe an der Tür eingreift.

2. Kaffeevollautomat nach Anspruch 1, **dadurch gekennzeichnet, dass** die Tür (3) rotatorisch oder translatorisch bewegbar ist.

3. Kaffeevollautomat nach Anspruch 1 oder 2, **gekennzeichnet durch** eine festliegende Rippenfläche (27) an der Tür (3), in die bei eingesetztem Vorratsbehälter (2) die verschwenkbare Rastnase (7) oder die verschwenkbare Rippenfläche(7') als Anschlag (7; 7') eingreift.

4. Kaffeevollautomat nach Anspruch 1 bis 3, **gekennzeichnet durch** eine Vorspannung des Anschlags (7; 7') in einer Arretierstellung.

5. Kaffeevollautomat nach einem der Ansprüche 1 bis 3, **gekennzeichnet durch** eine an dem Anschlag (7; 7') angeordnete Taste (8) zur manuellen Betätigung des Anschlags (7; 7') jedenfalls von einer Arretierstellung in eine Lösestellung.

6. Kaffeevollautomat nach einem der Ansprüche 1 bis 4, **gekennzeichnet durch** eine Federzunge (6) am Gehäuse (1), die aus dem Material des Gehäuses (1) ausgebildet ist und den Anschlag (7; 7') trägt.

7. Kaffeevollautomat nach einem der Ansprüche 1 bis 5, **gekennzeichnet durch** einen Auslöser (9) am Vorratsbehälter (2), der den Anschlag (7; 7') bei vollständig verschlossener Ausgabeöffnung (4) von einer Arretierstellung in eine Lösestellung überführt.

8. Kaffeevollautomat nach Anspruch 6, **gekennzeichnet durch** eine Nocke (9) als Auslöser, die mit eine Gegennocke (8) als Taste am Vorratsbehälter (2) zusammenwirkt.

9. Kaffeevollautomat nach Anspruch 7, **gekennzeichnet durch** eine lösbare Rastvorrichtung (20, 21, 22) am Vorratsbehälter (2), die die Tür (3) in der Schließstellung festhält.

10. Kaffeevollautomat nach einem der obigen Ansprüche mit einer Aufstellfläche im Gehäuse (1) für den Vorratsbehälter (2), **dadurch gekennzeichnet, dass** die Aufstellfläche regelmäßig durchbrochen ist.

11. Kaffeevollautomat nach dem obigen Anspruch, **gekennzeichnet durch** eine Leiteinrichtung unterhalb der Aufstellfläche, die in einen entnehmbaren Behälter mündet.

12. Kaffeevollautomat nach Anspruch 9 oder 10, **gekennzeichnet durch** eine Leiteinrichtung unterhalb der Aufstellfläche, die in das Mahlwerk mündet.

## Claims

1. Fully automatic coffee machine for household purposes, having a housing (1) and a storage container (2) removable therefrom for coffee beans, which can be moved on an actuating path, having a grinder for coffee beans, having a discharge opening (4) of the storage container (2) for the supply of the beans to the grinder and having a closure device (10) for closing the discharge opening (4) with a door (3), which when the storage container (2) is moved can be adjusted between an open position to release the discharge opening (4) and a closed position to close the discharge opening (4), wherein the door (3) can be moved by manual movement of the storage container (2) without pretensioning between the open position and the closed position, having a stop (7; 7') on the housing (1) of the fully automatic coffee machine, which stands transversely to the actuating path and, when a storage container is inserted, is in touching contact with the door (3) and can be moved from a locking position out of the actuating path into a release position, **characterised by**
- a pivotable latching lug (7) as a stop which, when a storage container (2) is inserted, engages in a locking manner in the direction of the actuating path of the door (3) on an edge (13) of the door (3),
or
- a pivotable rib surface (7') as a stop, the ribs of which run transversely to the actuating path and into which, when a storage container is inserted, a rib on the door engages.

2. Fully automatic coffee machine according to claim 1, **characterised in that** the door (3) can be moved rotationally or translationally.

3. Fully automatic coffee machine according to claim 1 or 2, **characterised by** a fixed rib surface (27) on the door (3), into which, when a storage container (2) is inserted, the pivotable latching lug (7) or the pivotable rib surface (7') engages as a stop (7; 7').

4. Fully automatic coffee machine according to claim 1 to 3, **characterised by** a pretensioning of the stop (7; 7') in a locking position.

5. Fully automatic coffee machine according to one of claims 1 to 3, **characterised by** a button (8) arranged on the stop (7; 7') for manual actuation of the stop (7; 7') at least from a locking position to a release position.

6. Fully automatic coffee machine according to one of claims 1 to 4, **characterised by** a spring tongue (6) on the housing (1) which is formed from the material of the housing (1) and supports the stop (7; 7').

7. Fully automatic coffee machine according to one of claims 1 to 5, **characterised by** a trigger (9) on the storage container (2), which transfers the stop (7; 7'), when the discharge opening (4) is completely closed, from a locking position to a release position.

8. Fully automatic coffee machine according to claim 6, **characterised by** a cam (9) as a trigger, which interacts with a counter-cam (8) as a button on the storage container (2).

9. Fully automatic coffee machine according to claim 7, **characterised by** a releasable latching device (20, 21, 22) on the storage container (2), which holds the door (3) in the closed position.

10. Fully automatic coffee machine according to one of the above claims, having a support surface in the housing (1) for the storage container (2), **characterised in that** the support surface is perforated at regular intervals.

11. Fully automatic coffee machine according to the above claim, **characterised by** a guide device below the support surface, which opens into a removable container.

12. Fully automatic coffee machine according to claim 9 or 10, **characterised by** a guide device below the support surface, which opens into the grinder.

## Revendications

1. Machine à café entièrement automatique à usage domestique, comprenant un boîtier (1) et un récipient de stockage (2) pour grains de café, amovible du boîtier, lequel, à cet effet, est déplaçable sur une voie d'actionnement, comprenant un moulin pour grains de café, comprenant une ouverture de distribution (4) du récipient de stockage (2) pour l'alimentation des grains de café dans le moulin, et comprenant un dispositif de fermeture (10) destiné à fermer l'ouverture de distribution (4) avec une porte (3), lequel est réglable entre une position d'ouverture destinée à libérer l'ouverture de distribution (4) et une position de fermeture destinée à fermer l'ouverture de distribution (4) lorsque le récipient de stockage (2) est déplacé, la porte (3) étant déplaçable sans précontrainte entre la position d'ouverture et la position de fermeture par déplacement manuel du récipient de stockage (2), comprenant une butée (7 ; 7') sur le boîtier (1) de la machine à café entièrement automatique, laquelle butée est en contact avec la porte (3) de manière transversale à la voie d'actionnement et lorsque le récipient de stockage est inséré, et est déplaçable d'une position de blocage en une position de détachement à partir de la voie d'actionnement, **caractérisée par**
- un ergot d'encliquetage (7) pivotant, en tant que butée, qui, lorsque le récipient de stockage (2) est inséré, a prise par blocage sur une arête (13) de la porte (3), en direction de la voie d'actionnement de la porte (3),
ou
- une surface nervurée (7') pivotante, en tant que butée, dont les nervures s'étendent transversalement à la voie d'actionnement et dans laquelle a prise une nervure sur la porte lorsque le récipient de stockage est inséré.

2. Machine à café entièrement automatique selon la revendication 1, **caractérisée en ce que** la porte (3) est déplaçable de manière rotative ou translatoire.

3. Machine à café entièrement automatique selon la revendication 1 ou 2, **caractérisée par** une surface nervurée (27) fixe sur la porte (3), dans laquelle, lorsque le récipient de stockage (2) est inséré, l'ergot d'encliquetage (7) pivotant ou la surface nervurée (7') pivotante a prise en tant que butée (7 ; 7').

4. Machine à café entièrement automatique selon les revendications 1 à 3, **caractérisée par** une précontrainte de la butée (7 ; 7') dans une position de blocage.

5. Machine à café entièrement automatique selon l'une quelconque des revendications 1 à 3, **caractérisée par** une touche (8) disposée sur la butée (7 ; 7') pour l'actionnement manuel de la butée (7 ; 7') en tout cas d'une position de blocage en une position de détachement.

6. Machine à café entièrement automatique selon l'une quelconque des revendications 1 à 4, **caractérisée par** une languette élastique (6) sur le boîtier (1), laquelle est réalisée dans la matière du boîtier (1) et porte la butée (7 ; 7').

7. Machine à café entièrement automatique selon l'une quelconque des revendications 1 à 5, **caractérisée par** un déclencheur (9) sur le récipient de stockage (2), lequel amène la butée (7 ; 7') d'une position de blocage en une position de détachement lorsque l'ouverture de distribution (4) est complètement fermée.

8. Machine à café entièrement automatique selon la revendication 6, **caractérisée par** une came (9) en tant que déclencheur, laquelle coopère avec une contre-came (8) en tant que touche sur le récipient de stockage (2).

9. Machine à café entièrement automatique selon la revendication 7, **caractérisée par** un dispositif d'enclenchement (20, 21, 22) amovible sur le récipient de stockage (2), lequel maintient la porte (3) dans la position de fermeture.

10. Machine à café entièrement automatique selon l'une quelconque des revendications précédentes, comprenant une surface de pose dans le boîtier (1) pour le récipient de stockage (2), **caractérisée en ce que** la surface de pose est ajourée de manière régulière.

11. Machine à café entièrement automatique selon la revendication précédente, **caractérisée par** un dispositif de guidage en dessous de la surface de pose, lequel débouche dans un récipient amovible.

12. Machine à café entièrement automatique selon la revendication 9 ou 10, **caractérisée par** un dispositif de guidage en dessous de la surface de pose, lequel débouche dans le moulin.
